# EUROPÄISCHE PATENTSCHRIFT

(11) **EP 1 521 698 B1**
(45) Veröffentlichungstag und Bekanntmachung des Hinweises auf die Patenterteilung: **10.08.2011**
(21) Anmeldenummer: 03762529.0
(22) Anmeldetag: 27.06.2003
(51) Int. Cl.: B60T 8/88

(54) **VERFAHREN ZUM ÜBERWACHEN DER FUNKTIONEN UND ERHÖHEN DER BETRIEBSSICHERHEIT EINES SICHERHEITSRELEVANTEN REGELUNGSSYSTEMS**
METHOD FOR MONITORING THE FUNCTIONS AND INCREASING THE OPERATIONAL RELIABILITY OF A SAFETY-RELEVANT CONTROL SYSTEM
PROCEDE PERMETTANT DE SURVEILLER LES FONCTIONS D'UN SYSTEME DE REGULATION DE SECURITE ET D'AUGMENTER LA SECURITE DE FONCTIONNEMENT DE CE SYSTEME

(30) Priorität: 05.07.2002 DE 10230577
(43) Veröffentlichungstag der Anmeldung: 13.04.2005
(73) Patentinhaber: Continental Teves AG & Co. oHG, 60488 Frankfurt am Main (DE)
(72) Erfinder: FACHINGER, Georg, 65549 Limburg (Lahn) (DE); KASCHA, Reinhold, 63674 Altenstadt (DE)
(86) Internationale Anmeldenummer: PCT/EP2003/006819
(87) Internationale Veröffentlichungsnummer: WO 2004/005090

(56) Entgegenhaltungen:
- WO-A-03/039929
- DE-A- 4 439 060
- DE-A- 19 607 429
- DE-A- 19 753 907
- US-A- 5 119 300

## Beschreibung

Die Erfindung bezieht sich auf ein Verfahren zum Überwachen der Funktionen und Erhöhen der Betriebssicherheit eines komplexen sicherheitsrelevanten Kraftfahrzeugregelungssystems, wie z.B. eines ABS, ASR, ESP, eines "Brake-By-Wire"-Systems (EHB,EMB), eines "Steering-By-Wire"-Systems etc., sowie zum Erkennen und Auswerten von Systemfehlern . Derartige Verfahren sind bekannt aus der US 5 119 300 A oder DE 196 07 429 A.

Sicherheitsrelevante Systeme, zu denen die vorgenannten Kraftfahrzeugregelungssysteme zählen, erfordern Maßnahmen zur Sicherung einer definierten Funktionsweise auch im Falle erkannter Systemfehler. Es ist oft nicht möglich, einen erkannten Fehler im Normalbetrieb direkt einer Systemkomponente zuzuordnen. Solche Fehler, auch Gruppenfehler genannt, tragen meistens nur die Aussage, dass eine bestimmte physikalische Größe im System nicht eingehalten werden konnte. Erst die Durchführung spezieller Tests, auch Fehlerlokalisierung genannt, ermöglicht es, die fehlerhafte Systemkomponente zu identifizieren (das bedeutet die Umwandlung des Gruppenfehlers in einen Einzelfehler) und die passende Fehlerauswirkung (durch angemessene Systemdegradation) herbeizuführen.

Bevor die Fehlerlokalisierung erfolgreich abgeschlossen werden kann (in manchen Fällen tritt dieses Ereignis verspätet ein oder eine Fehlerlokalisierung ist nicht möglich, weil beispielsweise Unterspannung vorliegt oder weil ein früherer Fehler die Nutzung der für die Testdurchführung notwendigen Systemkomponenten ausschließt), befindet sich das System in einem undefinierten Zustand: Man hat zwar Kenntnis von einem Fehlerzustand genommen, ist aber nicht in der Lage, die passende Systemauswirkung herbeizuführen.

Die Lösung dieses Problems wird heute in diversen Fehleranalyseverfahrengesucht, die als Ergebnis der Erstfehlerbetrachtung eine Entscheidungsmatrix ("Fehler -> Systemauswirkung") liefern, mit der die Auswirkungen der Fehler auf die Funktionen des System erfasst werden. Gruppenfehler gehören hierbei zu den besonders schwierigen Analysefällen, da sie auf Fehler vieler Systemkomponenten gleichzeitig zurück führen können. Aus diesem Grund ist es häufig unmöglich, die Auswirkungen eines Gruppenfehlers zu bewerten und eine zufriedenstellende pauschale Systemdegradationsstufe für den Gruppenfehler aufzufinden. Der andere Nachteil dieses Lösungsansatzes besteht darin, dass der Übergang von der pauschalen zu der individuellen Einzelfehlerauswirkung nur nach einem erfolgreichen Abschluss der Fehlerlokalisierung möglich ist. Verzögert sich die Lokalisierung aufgrund von temporären Ereignissen oder wird sie aufgrund früher eingetretener Fehler gar verhindert, so kommt die pauschale und meist schwerwiegende, weitgehende Systemdegradation zum Dauereinsatz. Dies wirkt sich wiederum nachteilig auf die Systemverfügbarkeit und Systemsicherheit aus.

Der vorliegenden Erfindung liegt daher die Aufgabe zugrunde, ein Verfahren zu entwickeln, das einerseits beim Auftreten von Systemfehlern das Regelungssystem in jeder Phase in einem definierten Zustand hält und das andererseits die Auswirkungen des Systemfehlers auf die Regelung minimiert.

Es hat sich herausgestellt, dass diese Aufgabe mit dem im beigefügten Patentanspruch genannten Verfahren gelöst werden kann, das im wesentlichen auf den folgenden Schritten beruht:
- Erkennen eines Systemfehlers und Bewertung als Gruppenfehler, wenn der erkannte Fehler nicht direkt einer Systemkomponente zuzuordnen ist,
- Herbeiführen einer vollständigen oder einer dem Gruppenfehler entsprechenden teilweisen Systemdegradation, d.h. Einschränkung der Systemfunktionen und der Systemverfügbarkeit,
- Lokalisierung des Systemfehlers und der Fehlerquelle durch Tests, logische Verknüpfung der Testergebnisse, Plausibilitätsbetrachtungen, und
- schrittweise, aber nicht vollständige Aufhebung der Einschränkungen der Systemfunktionen und Erhöhung der Systemverfügbarkeit in Abhängigkeit von dem Ergebnis der einzelnen Schritte zur Lokalisierung des Systemfehlers und der Fehlerquelle.

Mit dem erfindungsgemäßen Verfahren wird also beim Auftreten von Fehlern bereits vor einer Identifizierung des Fehlers die Aufrechterhaltung der definierten Funktion des Systems sichergestellt und sofort danach im Zuge der Fehlerlokalisierung für eine Minimierung der Fehlerauswirkungen Sorge getragen.

Weitere Merkmale, Vorteile und Einzelheiten der Erfindung gehen aus der folgenden Beschreibung sowie aus den beigefügten Abbildungen hervor.

Es zeigen
- Fig. 1: schematisch vereinfacht und beispielhaft die einzel- nen Schritte beim Auftreten eines Gruppenfehlers bis zur Lokalisierung des Einzelfehlers,
- Fig. 2: und
- Fig. 3: in gleicher Darstellungsweise wie Fig. 1 spezielle Lokalisierungsschritte für das Ausführungsbeispiel nach Fig. 1.

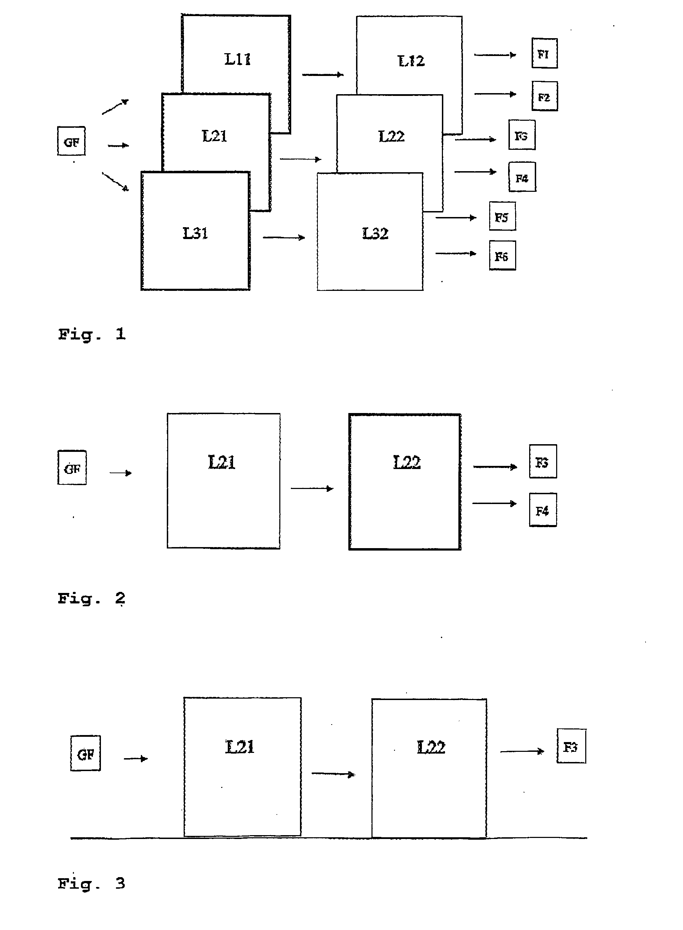

Die Figuren 1-3 veranschaulichen die prinzipielle Arbeits- und Wirkungsweise des erfindungsgemäßen Verfahrens anhand eines vereinfacht dargestellten Ausführungsbeispiels der Erfindung.

Erfindungsgemäß werden die Auswirkungen eines Gruppenfehlers GF, siehe Fig. 1, zunächst einer Superposition der Auswirkungen aller Einzelfehler F1 bis F6 gleichgesetzt. Beim Auftreten des Gruppenfehlers GF wird daher zunächst das gesamte System degradiert. Die Systemdegradation wird als Superposition der Auswirkungen der Einzelfehler F1 - F6 berechnet. Danach wird die Systemdegradation, d.h. die Einschränkung der Systemfunktionen und der Systemverfügbarkeit infolge des Gruppenfehlers GF, in Abhängigkeit von dem Fortschritt der Lokalisierung des Einzelfehlers F1 bis F6 wieder aufgehoben.

Der Gruppenfehler GF löst in dem Ausführungsbeispiel nach Fig. 1 drei parallel laufende Lokalisierungen L11, L21 und L31 aus. Jede dieser Lokalisierungen kann im nächsten Schritt zur Lokalisierung von jeweils zwei Einzelfehlern F1, F2; F3, F4; F5, F6 führen. Vor dem Abschluss des ersten Lokalisierungsschritts (L11, L21, L31) wird die Systemdegradation als Superposition der Auswirkungen der Einzelfehler F1 - F6 bestimmt.

Der erste Lokalisierungsschritt (L11, L21, L31) führt im Beispiel nach Fig. 2 zu dem Ergebnis, dass nur im Bereich der Lokalisierung L21 ein Fehler vorliegen kann. Die Lokalisierungen L11 und L31 zeigen keine Auffälligkeiten; die Einzelfehlerquellen F1, F2 und F5, F6 scheiden aus. Die vor diesem ersten Lokalisierungsschritt eingeleiteten Einschränkungen der Systemfunktionen und der Systemverfügbarkeit können entsprechend der Erkenntnis, dass nur noch F3, F4 als Fehlerquellen in Frage kommen, reduziert werden. Nach dem Abschluss des zweiten Lokalisierungsschritts wird die Systemdegradation als Superposition der Auswirkungen der Einzelfehler F3 und F4 berechnet.

Die Lokalisierung wird fortgesetzt. Hierauf bezieht sich Fig. 3. Nach Abschluss dieses zweiten Lokalisierungsschrittes steht im Beispiel nach Fig. 3 fest, dass nur ein Einzelfehler F3 im System vorhanden ist. Die Systemdegradation ergibt sich direkt aus der Auswirkung des Einzelfehlers F3.

Die Eingrenzung des Systemfehlers bzw. die Lokalisierung der Fehlerquelle erfolgt auf Basis bekannter Methoden und Schlussfolgerungen sehr unterschiedlicher Art, z.B. durch Tests, logische Verknüpfung der Testergebnisse, Plausibilitätsbetrachtungen etc..

Gegenstand der Erfindung ist also ein für den Einsatz in technischen Anwendungen unterschiedlicher Art geeignetes Verfahren, das die Möglichkeit bietet, die Systemdegradation eines beliebigen sicherheitskritischen Systems während der aufgrund aufgetretener Gruppenfehler laufenden Lokalisierungen dynamisch zu minimieren. Dieses in jeder Techniksparte anwendbare Verfahren erhöht erheblich die Systemverfügbarkeit und gewährleistet letztendlich eine entscheidend höhere Systemsicherheit als die heute gängigen Verfahren, die sich auf die schwer definierbare pauschale Auswirkung der Gruppenfehler stützen.

Durch die schrittweise Fehlerlokalisierung wird erreicht, dass die anfängliche Systemdegradation aufgrund eines Gruppenfehlers dauernd und fließend minimiert wird, bis die Ebene des erkannten Einzelfehlers erreicht wird. Wird die Lokalisierung aufgrund temporärer Ereignisse verzögert oder aufgrund früherer Fehler gar abgebrochen, beschränkt sich die Systemdegradation auf die Auswirkungen der (noch) nicht ausgeschlossenen Einzelfehlern.

Das erfindungsgemäße Verfahren bringt im Vergleich zu den bisherigen Verfahren unter anderem folgende Vorteile:
Die Auswirkung eines Gruppenfehlers ergibt sich automatisch aus der Summe der leicht definierbaren Auswirkungen für korrelierte Einzelfehler. Eine Fehleranalyse für Gruppenfehler entfällt.
Die Auswirkungen eines Gruppenfehlers werden mit dem Fortgang der Lokalisierungen abgeschwächt; das System erfährt dynamisch eine erhebliche Steigerung der Verfügbarkeit und Sicherheit.

Der Fall, dass ein Gruppenfehler nicht zu Ende lokalisiert werden konnte, bedarf keiner gesonderten Behandlung.

## Patentansprüche

1. Verfahren zum Überwachen der Funktionen und Erhöhen der Betriebssicherheit eines komplexen sicherheitsrelevanten Kraftfahrzeugregelungssystems, wie z.B. eines ABS, ASR, ESP, eines "Brake-By-Wire"-Systems (EHB,EMB), eines "Steering-By-Wire"-Systems etc., sowie zum Erkennen und Auswerten von Systemfehlern,
**gekennzeichnet durch** die Schritte:
- Erkennen eines Systemfehlers und Bewertung als Gruppenfehler, wenn der erkannte Fehler nicht direkt einer Systemkomponente zuzuordnen ist,
- Herbeiführen einer vollständigen oder einer dem Gruppenfehler entsprechenden teilweisen Systemdegradation, d.h. Einschränkung der Systemfunktionen und der Systemverfügbarkeit,
- Lokalisierung des Systemfehlers und der Fehlerquelle **durch** Tests und/oder logische Verknüpfung der Testergebnisse und/oder Plausibilitätsbetrachtungen und
- schrittweise, aber nicht vollständige Aufhebung der herbeigeführten Systemdegradation in Abhängigkeit von dem Ergebnis der einzelnen Schritte zur Lokalisierung des Systemfehlers und der Fehlerquelle.

## Claims

1. Method for monitoring the functions and increasing the operational reliability of a complex safety-relevant motor vehicle control system such as, for example, an ABS, traction control system, ESP, a "brake-by-wire" system (EHB, EMB), a "steering-by-wire" system etc., as well as for detecting and evaluating system faults,
**characterized by** the steps:
- a system fault is detected and evaluated as a group fault if the detected fault cannot be assigned directly to a system component,
- complete system degradation, or partial system degradation corresponding to the group fault, i.e. restriction of the system functions and of the system availability, is brought about,
- the system fault and the fault source are located by means of tests and/or logic combination of the test results and/or plausibility considerations, and
- the system degradation which has been brought about is cancelled incrementally, but not completely, as a function of the result of the individual steps for locating the system fault and the fault source.

## Revendications

1. Procédé pour surveiller le fonctionnement et accroître la sécurité opérationnelle d'un système complexe de régulation de véhicule automobile concernant la sécurité, par exemple un système ABS, ASR, ESP, un système « freinage électronique » (EHB, EMB), un système « direction électronique », etc., ainsi que pour détecter et interpréter les défauts du système, **caractérisé par** les étapes suivantes :
- détection d'un défaut du système et évaluation en tant que défaut de groupe lorsque le défaut détecté n'est pas à associer directement à un composant du système,
- provocation d'une dégradation du système totale ou partielle correspondant au défaut de groupe, c'est-à-dire limitation du fonctionnement du système et de la disponibilité du système,
- localisation du défaut du système et de la source du défaut par des essais et/ou une combinaison logique des résultats des essais et/ou la prise en compte de la plausibilité et
- élimination étape par étape, mais pas totale de la dégradation provoquée du système en fonction du résultat des étapes individuelles en vue de la localisation du défaut du système et de la source du défaut.
